(19) Europäisches Patentamt / European Patent Office / Office européen des brevets

(11) EP 2 735 580 A1

(12) EUROPEAN PATENT APPLICATION
published in accordance with Art. 153(4) EPC

(43) Date of publication:
**28.05.2014 Bulletin 2014/22**

(21) Application number: **12832347.4**

(22) Date of filing: **10.09.2012**

(51) Int Cl.:
***C08G 73/10*** *(2006.01)* ***B32B 27/34*** *(2006.01)*
***C09J 7/00*** *(2006.01)* ***C09J 179/08*** *(2006.01)*
***C09J 183/08*** *(2006.01)* ***C09J 183/10*** *(2006.01)*

(86) International application number:
**PCT/JP2012/073025**

(87) International publication number:
**WO 2013/039029 (21.03.2013 Gazette 2013/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.09.2011 JP 2011197953**

(71) Applicant: **Toray Industries, Inc.**
**Tokyo, 103-8666 (JP)**

(72) Inventors:
- **WATANABE, Takuo**
  **Seoul, 140726 (KR)**
- **LEE, ChungSeon**
  **Gwangju, 503310 (KR)**

(74) Representative: **Hoefer & Partner**
**Pilgersheimer Straße 20**
**81543 München (DE)**

# (54) POLYIMIDE RESIN, RESIN COMPOSITION AND LAMINATED FILM THAT USE SAME

(57) An object is to provided a polyimide resin that is prevented from generation of volatiles due to decomposition or the like even at high temperatures equal to or higher than 25°C and has good adhesiveness, and a resin composition and a laminated film using the same. Provided is a polyimide resin having at least a tetracarboxylic dianhydride residue and a di-amine residue and having a glass transition temperature of 30°C or lower, wherein a residue of a polysiloxane di-amine represented by general formula (1) is contained as the di-amine residue,

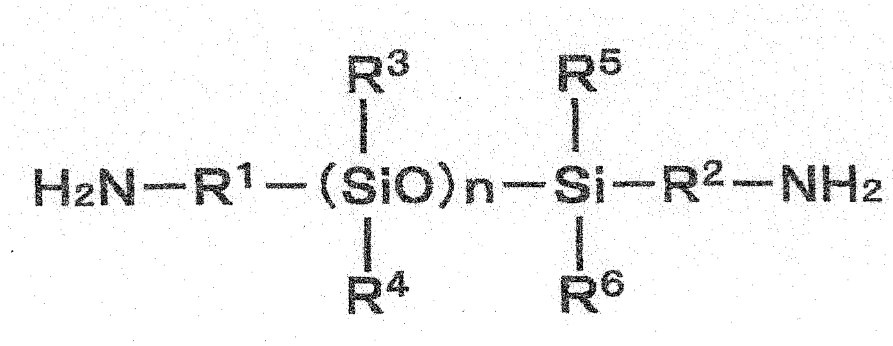

(1)

wherein n is a natural number and the average calculated from the average molecular weight of the polysiloxane di-amine is within the range of from 5 to 30; $R^1$ and $R^2$ may be the same or different and each represent an alkylene group having 1 to 30 carbon atoms or a phenylene group; $R^3$ to $R^6$ may be the same or different and each represent an alkylene group having 1 to 30 carbon atoms, a phenyl group, or a phenoxy group.

EP 2 735 580 A1

## Description

TECHNICAL FIELD

The present invention relates to a heat-resistant adhesive. More particularly, the present invention relates to a heat-resistant adhesive that allows no generation of volatiles due to, e.g., decomposition of the adhesive even under a high temperature environment, has excellent adhesiveness, and can be used for materials for steps in the production of electronic devices.

BACKGROUND ART

Many rubber adhesives such as a natural rubber and a styrene-butadiene rubber have been conventionally used commonly as adhesives, and acrylic resins and silicone resins have been used for materials for steps in the production of electronic devices because high heat resistance is required.

Because of having high transparency as well, acrylic resins have been used for optical materials for flat displays such as liquid crystal displays (see, for example, Patent Document 1), but acrylic resins are still insufficient in heat resistance because acrylic resins themselves decompose to generate volatile components when being left at a temperature of 200°C or higher, particularly of 250°C or higher, for a long period of time. Silicone resins have a wide use temperature range extending from low temperatures to high temperatures and exhibit higher heat resistance than acrylic resins (see, for example, Patent Document 2), but when they are left at a temperature of 250°C or higher, particularly of 300°C or higher, for a long period of time, volatile components are generated due to decomposition and the like. Moreover, because of containing low molecular weight silicone components, silicone adhesives have the problem that such components have adverse effects on electronic parts.

Examples of resins having a heat resistance of 250°C or higher include polyimide resins. As a polyimide resin to be used for an application as an adhesive agent, there has been proposed, for example, a siloxane polyimide resin prepared by copolymerizing a siloxane di-amine for the purpose of inhibiting the generation of gas during cure and developing excellent adhesion property (see, for example, Patent Document 3). In addition, there has been proposed a polysiloxane polyimide resin whose glass transition temperature is adjusted to 100 to 150°C by copolymerizing a polysiloxane di-amine as a di-amine component for the purpose of making a semi-conductor adhesive tape capable of being stuck at a temperature of 300°C

or lower (see, for example, Patent Document 4).

PRIOR ART DOCUMENTS

PATENT DOCUMENTS

Patent Document 1: Japanese Patent Laid-open Publication No. 2008-308549
Patent Document 2: Japanese Patent Laid-open Publication No. 2005-105246
Patent Document 3: Japanese Patent Laid-open Publication No. 1993-200946
Patent Document 4: Japanese Patent Laid-open Publication No. 2004-277619

SUMMARY OF THE INVENTION

PROBLEMS TO BE SOLVED BY THE INVENTION

However, even a polyimide resin improved in adhesion force cannot be pressure bonded to another substrate at room temperature and therefore cannot be used as an adhesive.

In view of such situations, it is an object of the present invention to provide a polyimide resin that generates no volatiles due to decomposition or the like even at high temperatures of 250°C or higher and exhibits satisfactory adhesiveness at room temperature, and also provide an adhesive resin and an adhesive resin laminated film using the same.

SOLUTIONS TO THE PROBLEMS

That is, the present invention is directed to a polyimide resin having at least a tetracarboxylic dianhydride residue and a. di-amine residue and having a glass transition temperature of 30°C or lower, wherein a residue of a polysiloxane di-amine represented by general formula (1) is contained as the di-amine residue.

[Chemical Formula 1]

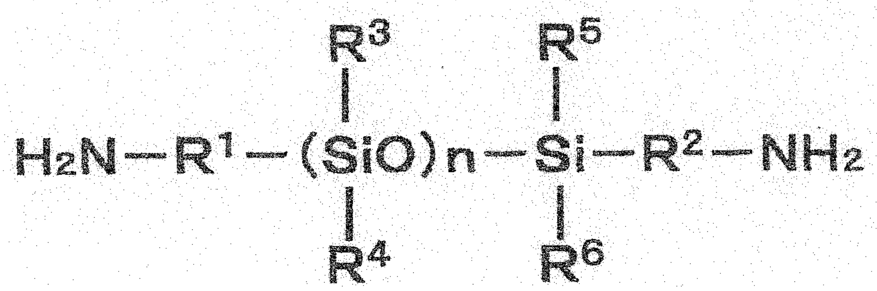

(1)

n is a natural number and the average calculated from the average molecular weight of the polysiloxane di-amine is within the range of from 5 to 30. $R^1$ and $R^2$ may be the same or different and each represent an alkylene group having 1 to 30 carbon atoms or a phenylene group. $R^3$ to $R^6$ may be the same or different and each represent an alkylene group having 1 to 30 carbon atoms, a phenyl group, or a phenoxy group.

EFFECTS OF THE INVENTION

According to the present invention, there can be provided a highly heat-resistant polyimide resin that exhibits good adhesiveness at room temperature and is prevented from generation of volatiles due to decomposition or the like even at high temperatures equal to or higher than 250°C, and an adhesive resin and an adhesive resin-laminated film using the same.

EMBODIMENTS OF THE INVENTION

The polyimide resin of the present invention can be used in the form of an adhesive laminated film or an adhesive laminated substrate by being laminated to a heat-resistant insulation film, a glass substrate, or the like.

The glass transition temperature of the polyimide resin of the present invention is 30°C or lower, and preferably 20°C or lower. If the glass transition temperature is 30°C or lower, satisfactory adhesiveness is exhibited when a substrate, which serves as an adherend, is pressure bonded to an adhesive film formed using the polyimide resin of the present invention. The lower limit of the glass transition temperature, which is not particularly limited, is preferably -30°C or higher, and more preferably is -20°C or higher. If the glass transition temperature is -30°C or higher, moderate tackiness is exhibited, so that, for example, a release treated protective film can be easily peeled after being stuck.

Adhesiveness as referred to herein indicates that a substrate exhibits adhesion force as strong as the substrate does not peel spontaneously when the adhesive film is pressure bonded to the substrate at a room temperature of 20°C to 30°C. Specifically, it indicates that an adhesion force of 1 g/cm or more is exhibited when a substrate, which serves as an adherend, is peeled at 50 mm/min at a peel off angle of 90°.

The polyimide resin of the present invention exhibits high heat resistance. The heat resistance in the present invention is defined by a thermal decomposition onset temperature at which volatiles are generated by decomposition and the like. The thermal decomposition onset temperature is preferably 250°C or higher, and more preferably 300°C or higher.

The thermal decomposition onset temperature of the present invention can be measured by using a thermo gravimetric analyzer (TGA). Concrete description is made to the measuring method. A prescribed amount of a polyimide resin is charged into a TGA and then held at 60°C for 30 minutes, thereby removing the water absorbed by the polyimide resin. Subsequently, the temperature is raised up to 500°C at a rate of 5°C/min. From the weight loss curve, the temperature at which weight loss starts is defined to be a thermal decomposition onset temperature.

The polyimide resin of the present invention has at least a tetracarboxylic dianhydride residue and a di-amine residue. In the present invention, a residue of a polysiloxane di-amine represented by general formula (1) is contained as the di-amine residue.

[Chemical Formula 2]

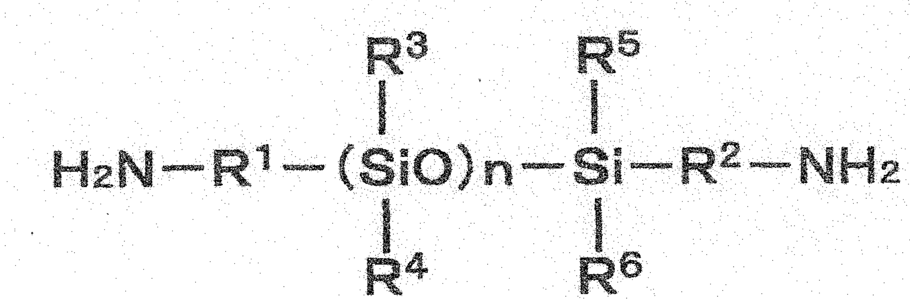

(1)

n is a natural number and the average calculated from the average molecular weight of the polysiloxane diamine is within the range of from 5 to 30. $R^1$ and $R^2$ may be the same or different and each represent an alkylene group having 1 to 30 carbon atoms or a phenylene group. $R^3$ to $R^6$ may be the same or different and each represent an alkylene group having 1 to 30 carbon atoms, a phenyl group, or a phenoxy group. Examples of a preferred alkyl group having 1 to 30 carbon atoms include a methyl group, an ethyl group, a propyl group, and a butyl group.

The average molecular weight of the polysiloxane di-amine can be determined by neutralization titrating amino groups of the polysiloxane di-amine to calculate an amino group equivalent, and doubling the resulting amino group equivalent. For example, a prescribed amount of a polysiloxane di-amine as a sample is taken and put into a beaker, and then this is dissolved in a prescribed amount of a 1 : 1 mixed solution of isopropyl alcohol (hereinafter, referred to as IPA) and toluene. To this solution is dropped a 0.1 N hydrochloric acid aqueous solution under stirring, and then an amino group equivalent can be calculated from the amount of the 0.1 N hydrochloric acid aqueous solution dropped until the arrival at the neutralization point. The value produced by doubling the amino group equivalent is the average molecular weight.

On the other hand, the molecular weight in the case of n = 1 in the polysiloxane di-amine used and the molecular weight in the case of n = 10 in the polysiloxane di-amine used are calculated from their chemical structural formulae, and the relation between the value of n and the molecular weight can be determined as a linear function equation. The average of n can be determined by applying the average molecular weight to the equation.

Since the polysiloxane di-amine represented by general formula (1) is not of a single n but is a mixture having two or more values of n in some cases, "n" in the present invention represents an average. n is within the range of from 5 to 30, and preferably within the range of from 7 to 25. When n is within the range of from 5 to 30, the glass transition temperature of the polyimide resin can be adjusted to 30°C or lower. In addition, gelation does not occur during the polymerization for forming the polyimide resin.

Specific examples of the polysiloxane di-amine represented by general formula (1) include α,ω-bis(3-aminopropyl)polydimethylsiloxane, α,ω-bis(3-aminopropyl)polydiethyisiloxane, α,ω-bis(3-aminopropyl)polydipropylsiloxane, α,ω-bis(3-aminopropyl)polydibutylsiloxane, α,ω-bis(3-aminopropyl)polydiphenoxysiloxane, α,ω-bis(2-aminoethyl)polydimethylsiloxane, α,ω-bis(2-aminoethyl)polydiphenoxysiloxane, α,ω-bis(4-aminobutyl)polydimethylsiloxane, α,ω-bis(4-aminobutyl)polydiphenoxysiloxane, α,ω-bis(5-aminopentyl)polydimethylsiloxane, α,ω-bis(5-aminopentyl)polydiphenoxysiloxane, α,ω-bis(4-aminophenyl)polydimethylsiloxane, and α,ω-bis(4-aminophenyl)polydiphenoxysiloxane. The polysiloxane di-amine may be used either singly or in a combination of two or more thereof.

The polyimide resin of the present invention preferably contains the residue of the polysiloxane di-amine represented by general formula (1) in all di-amine residues in an amount of 60 mol% or more, more preferably 70 mol% or more, even more preferably 75 mol% or more, and particularly preferably 80 mol% or more. The upper limit, which is not particularly limited, is preferably 99 mol% or less. The residue of the polysiloxane di-amine represented by general formula (1) is contained in 60 mol% or more, and thus the polyimide resin can have a glass transition temperature of 30°C or lower and develop good adhesiveness at room temperature.

In the present invention, the polyimide resin preferably comprises the residue of the polysiloxane di-amine and a residue of an aromatic di-amine. The amount of the residue of the aromatic di-amine is 1 to 40 mol%, and preferably 2 to 30 mol% of all the di-amine residues. Both the residue of the polysiloxane di-amine and the residue of the aromatic di-amine are contained, and thus such characteristics as adhesiveness and heat resistance can be achieved at a high level.

An aromatic di-amine represented by general formula (2) is preferably used as the aromatic di-amine to be preferably used in the present invention. The case of using the aromatic di-amine represented by general formula (2) is preferred because such characteristics as adhesiveness and heat resistance can be achieved at a higher level.

[Chemical Formula 3]

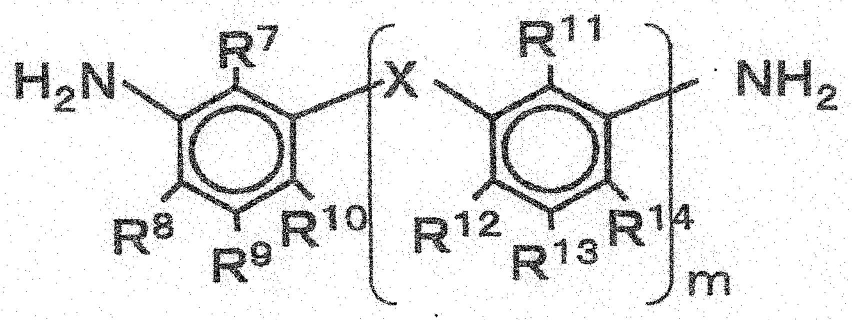

(2)

m represents an integer within the range of from 1 to 3. X represents a group selected from O, $SO_2$, CO, $CH_2$, $C(CH_3)_2$, and $C(CF_3)_2$. $R^7$ to $R^{14}$ may be the same or different and each represent a group selected from a hydrogen atom, an alkyl group having 1 to 30 carbon atoms, an alkoxy group having 1 to 30 carbon atoms, a hydroxyl group, halogen, a carboxyl group, a sulfone group, a nitro group, and a cyano group.

Specific examples of the aromatic di-amine include p-phenylenediamine, m-phenylenediamine, 2,5-diaminotoluene, 2,4-diaminotoluene, 3,5-diaminobenzoic acid, 2,6-diaminobenzoic acid, 2-methoxy-1,4-phenylenediamine, 4,4'-diaminobenzanilide, 3,4'-diaminobenzanilide, 3,3'-diaminobenzanilide, 3,3'-dimethyl-4,4'-diaminobenzanilide, 9,9-bis(4-aminophenyl)fluorene, 9,9-bis(3-aminophenyl)fluorene, 9,9-bis(3-methyl-4-aminophenyl)fluorene, 9,9-bis(3,5-dimethyl-4-aminophenyl)fluorene, 9,9-bis(3-methoxy-4-aminophenyl)fluorene, 9,9-bis(4-aminophenyl)fluorene-4-carboxylic acid, 9,9-bis(4-aminophenyl)fluorene-4-methyl, 9,9-bis(4-aminophenyl)fluorene-4-methoxy, 9,9-bis(4-aminophenyl)fluorene-4-ethyl, 9,9-bis(4-aminophenyl)fluorene-4-sulfone, 9,9-bis(4-aminophenyl)fluorene-3-carboxylic acid, 9,9-bis(4-aminophenyl)fluorene-3-methyl, 1,3-diaminocyclohexane, 1,4-diaminocyclohexane, 4,4'-methylenebis(cyclohexylamine), 3,3'-methylenebis(cyclohexylamine), 4,4'-diamino-3,3'-dimethyl dicyclohexylmethane, 4,4'-diamino-3,3'-dimethyldicyclohexyl, benzidine, 2,2'-dimethylbenzidine, 3,3'-dimethylbenzidine, 3,3'-dimethoxybenzidine, 2,4-diaminopyridine, 2,6-diaminopyridine, 1,5-diaminanaphthalene, 2,7-diaminofluorene, p-aminobenzylamine, m-aminobenzylamine, 4,4'-bis(4-aminophenoxy)biphenyl, 4,4'-diaminodiphenylether, 3,3'-diamanodiphenylether, 3,4'-diaminodiphenylether, 4,4'-diamino diphenyl sulfone, 3, 3' -diamino diphenyl sulfone, 3,3'-diaminodiphenylmethane, 4,4'-diaminodiphenylmethane, 4,4'-diaminodiphenylsulfide, 3,3'-diaminobenzophenone, 3,4'-diaminobenzophenone, 4,4'-diaminobenzophenone, 3,3'-dimethyl-4,4'-diamznodiphenylmethane, 1,3-bis(4-aminophenoxy)benzene, 1,3-bis(3-aminophenoxy)benzene, 1,4-bis(4-aminophenoxy)benzene, 1,4-bis(3-aminophenoxy)benzene, 2,2-bis[(4-(4-aminophenoxy)phenyl)]propane, 2,2-bis[(4-(3-aminophenoxy)phenyl)]propane, bis[4-(4-aminophenoxy)phenyl]methane, bis[4-(3-aminophenoxy)phenyl] methane, bis[4-(4-antinophenoxy)phenyl]ether, bis[4-(3-aminophenoxy)phenyl]ether, bis[4-(4-aminophenoxy)phenyl] sulfone, bis[4-(3-aminophenoxy)phenyl]sulfone, and 2,2-bis[4-(4-aminophenoxy)phenyl]hexafluoropropane. The aromatic di-amine may be used either singly or in a combination of two or more thereof.

Among these aromatic di-amines, aromatic di-amines with a structure having high bendability are preferred, and specifically, 1,3-bis(3-aminophenoxy)benzene, 3,3'-diamino diphenyl sulfone, 3,3'-diaminodiphenylether, and 3,3'-diaminobenzophenone are preferred, and 1,3-bis-(3-aminophenoxy)benzene and 3,3'-diamino diphenyl sulfone are particularly preferred.

The polyimide resin of the present invention preferably includes a residue of an aromatic tetracarboxylic dianhydride as a tetracarboxylic dianhydride residue. Specific examples of the aromatic tetracarboxylic dianhydride include pyromellitic dianhydride, 3,3',4,4'-biphenyltetracarboxylic dianhydride, 2,2'-dimethyl-3,3',4,4'-biphenyltetracarboxylic dianhydride, 5,5'-dimethyl-3,3',4,4'-biphenyltetracarboxylic dianhydride, 2,3,3',4'-biphenyltetracarboxylic dianhydride, 2,2',3,3'-biphenyltetracarboxylic dianhydride, 3,3',4,4'-diphenylethertetracarboxylic dianhydride, 2,3,3',4'-diphenylethertetracarboxylic dianhydride, 2,2',3,3'-diphenylethertetracarboxylic dianhydride, 3,3',4,4'-benzophenonetetracarboxylic dianhydride, 2,2',3,3'-benzophenonetetracarboxylic dianhydride, 2,3,3',4'-benzophenonetetracarboxylic dianhydride, 3,3',4,4'-diphenylsulfonetetracarboxylic dianhydride, 2,3,3',4'-diphenylsulfonetetracarboxylic dianhydride, 3,3',4,4'-diphenylsulfoxidetetracarboxylic dianhydride, 3,3',4,4'-diphenylsulfidetetracarboxylic dianhydride, 3,3',4,4'-diphenylmethylenetetracarboxylic dianhydride, 4,4'-isopropylidenediphthalic anhydride, 4,4'-(hexafluoroisopropylidene)diphthalic anhydride, 3,4,9,10-perylenetetracarboxylic dianhydride, 2,3,6,7-naphthalenetetracarboxylic dianhydride, 1,4,5,8-naphthalenetetracarboxylic dianhydride, 1,2,5,6-naphthalenetetracarboxylic dianhydride, 3,3",4,4"-paraterphenyltetracarboxylic dianhydride, 3,3",4,4"-metaterphenyltetracarboxylic dianhydride, 2,3,6,7-anthracenetetracarboxylic dianhydride, and 1,2,7,8-phenanthrenetetracarboxylic dianhydride. The aromatic tetracarboxylic dianhydride may be used either singly or in a combination of two or more thereof.

In the present invention, the polyimide resin may contain a tetracarboxylic dianhydride with an aliphatic ring to

such an extent that the heat resistance of the polyimide resin is not impaired. Specific examples of the tetracarboxylic dianhydride with an aliphatic ring include 2,3,5-tricarboxycycyclopentylacetic dianhydride, 1,2,3,4-cyclobutanetetracarboxylic dianhydride, 1,2,3,4-cyclopentanetetracarboxylic dianhydride, 1,2,3,5-cyclopentanetetracarboxylic dianhydride, 1,2,4,5-bicyclohexenetetracarboxylic dianhydride, 1,2,4,5-cyclohexanetetracarboxylic dianhydride, and 2,3,3a,4,5,9b-hexahydro-5-tretrahydro-2,5-dioxo-3-furanyl)-naphtho[1,2-C]furan-1,3-dione. The tetracarboxylic dianhydride may be used either singly or in a combination of two or more thereof.

The molecular weight of the polyimide resin of the present invention can be adjusted by using the tetracarboxylic acid component or the di-amine component for synthesis in an equimolar amount or using one of them in excess. It is also possible to use either the tetracarboxylic acid component or the di-amine component in excess and to cap an end of a polymer chain with an end cap compound such as an acid component or an amine component. A dicarboxylic acid or its anhydride is preferably used as the end cap compound for the acid component, and a monoamine is preferably used as the end cap compound for the amine component. At this time, it is preferred to adjust the acid equivalent of a tetracarboxylic acid component and the amine equivalent of a di-amine component including the end cap compound for the acid component or the amine component to be equimolar with each other.

When the mole ratio is adjusted so that the tetracarboxylic acid component is excess or the di-amine component is excess, a dicarboxylic acid or an anhydride thereof and a monoamine, such as benzoic acid, phthalic anhydride, tetrachlorophthalic anhydride and aniline, may be added as the end cap compound.

In the present invention, the mole ratio of (the tetracarboxylic acid component)/(the di-amine component) of the polyimide resin can be appropriately adjusted so that the viscosity of the resin solution falls within such a range that the resin solution can be easily used for application or the like, and it is common to adjust the mole ratio of (the tetracarboxylic acid component)/(the di-amine component) within the range of 100/ (100 to 95) or (100 to 95)/100. However, gradual loss of molar balance reduces the molecular weight of the resin to afford a reduced mechanical strength of a film formed and also tends to afford reduced adhesive force. Therefore, it is preferred to adjust the mole ratio to an extent not to weaken the adhesive force.

There is no particular restriction in the method for synthesizing the polyimide resin of the present invention. For example, in the case that a polyamic acid which is a precursor of the polyimide resin of the present invention is polymerized, a polyamic acid resin solution is obtained by stirring tetracarboxylic dianhydride and a di-amine in an organic solvent at 0 to 100°C for 1 to 100 hours. In the case that the composition of the polyimide resin becomes soluble in an organic solvent, a polyimide resin solution is obtained by polymerizing a polyamic acid, then raising its temperature to 120 to 300°C, and stirring it for 1 to 100 hours to convert it into a polyimide. During this operation, toluene, o-xylene, m-xylene, p-xylene, or the like is allowed to be added to the reaction solution, followed by the azeotropic removal of water generated by the imidization reaction together with such a solvent.

Examples of the solvent to be used for the synthesis of a polyimide or a polyamic acid which is a precursor of a polyimide include amide polar solvents such as N-methyl-2-pyrrolidone, N,N-dimethylacetamide, and N,N-dimethylformamide, lactone polar solvents such as β-propiolactone, γ-butyrolactone, γ-valerolactone, δ-valerolactone, γ-caprolactone, and ε-caprolactone, as well as methylcellosolve, methylcellosolve acetate, ethylcellosolve, ethylcellosolve acetate, methylcarbitol, ethylcarbitol, diethylene glycol dimethyl ether (diglyme), and ethyl lactate. These may be used either singly or in a combination of two or more thereof. Usually, the concentration of the polyimide resin solution or the polyamic acid resin solution is preferably 10 to 80% by weight, and more preferably 20 to 70% by weight.

In the case of a polyamic acid resin solution, it is applied to a substrate such as a film and a glass sheet and dried to form a coating film, and the film is then heat treated, thereby resulting in the conversion into a polyimide. Although the temperature in the conversion of a polyimide precursor to a polyimide is needed to be 240°C or higher, an imidization catalyst is contained in a polyamic acid resin composition to thereby enable imidization at a lower temperature in a shorter period of time. Specific examples of the imidization catalyst include, but are not limited to, pyridine, trimethyl pyridine, β-picoline, quinoline, isoquinoline, imidazole, 2-methylimidazole, 1,2-dimethylimidazole, 2-phenylimidazole, 2,6-lutidine, triethylamine, m-hydroxybenzoic acid, 2,4-dihydroxybenzoic acid, p-hydroxyphenylacetic acid, 4-hydroxyphenylpropionic acid, p-phenolsulfonic acid, p-aminophenol, and p-aminobenzoic acid.

The amount of the imidization catalyst is preferably 3 parts by weight or more, and more preferably 5 parts by weight or more based on 100 parts by weight of the polyamic acid solid. By containing 3 parts by weight or more of the imidization catalyst, the imidization can be completed even by heat treatment at lower temperatures. The amount of the imidization catalyst is preferably 10 parts by weight or less, and more preferably 8 parts by weight or less. By adjusting the content of the imidization catalyst to 10 parts by weight or less, the amount of the imidization catalyst remaining in the polyimide resin layer after the heat treatment can be minimized and generation of volatiles can be suppressed.

The resin composition of the present invention is used mainly as an adhesive resin composition. The resin composition contains at least the polyimide resin of the present invention. In addition to the polyimide resin, other resins and fillers may be added to such an extent not to impair the effect of the present invention. Examples of the additional resins include heat-resistant polymer resins including acrylic resins, acrylonitrile resins, butadiene resins, urethane resins, polyester resins, polyamide resins, polyamide-imide resins, epoxy resins, and phenol resins. Examples of the

filler include fine particles and fillers made of organics or inorganics. Specific examples of the fine particles and the fillers include silica, alumina, titanium oxide, quartz powder, magnesium carbonate, potassium carbonate, barium sulfate, mica, and talc.

For the purpose of improving such characteristics as adhesiveness, heat resistance, coatability, and pot life, a surfactant, a silane coupling agent, a compound having a reactive functional group, such as a crosslink group, in the molecule thereof, and the like may be added. Examples of the reactive functional group include an epoxy group, an isocyanate group, a vinyl group, and an acetyl group, and a compound having two or more such functional groups in one molecule thereof is preferred.

The glass transition temperature of the resin composition of the present invention is 30°C or lower, and preferably 20°C or lower. If the glass transition temperature is 30°C or lower, satisfactory adhesiveness is exhibited when a substrate, which serves as an adherend, is pressure bonded to an adhesive film formed using the resin composition of the present invention.

The lower limit of the glass transition temperature, which is not particularly limited, is preferably -30°C or higher, and more preferably is -20°C or higher. If the glass transition temperature is -30°C or higher, moderate tackiness is exhibited, so that, for example, a release treated protective film can be easily peeled after being stuck.

The resin composition of the present invention exhibits high heat resistance, and the thermal decomposition onset temperature thereof is 250°C or higher, and preferably 300°C or higher.

The laminated film of the present invention is a film that can be used mainly as an adhesive laminated film and it can be obtained by laminating the resin composition of the present invention on one side or both sides of a heat-resistant insulation film. The laminated film of the present invention can also be used as an adhesive film as it is. In addition, the laminated film of the present invention can also be used as an adhesive transfer film, which is used by pressure bonding the adhesive layer of the laminated film to a glass substrate or the like and then removing only the heat-resistant insulation film, thereby transferring the adhesive layer to the glass substrate or the like.

Examples of the heat-resistant insulation film of the present invention include films made of an aromatic polyimide resin, a polyphenylene sulfide resin, an aromatic polyamide resin, a polyamide-imide resin, an aromatic polyester resin, and the like, and a polyimide film made of an aromatic polyimide resin is particularly preferred. Specific examples of the polyimide film include "Kapton" (registered trademark) produced by Du pont-Toray Co., Ltd., "UPILEX" (registered trademark) produced by Ube Industries, Ltd., and "Apical" (registered trademark) produced by Kaneka Corporation.

The thickness of the heat-resistant insulation film is not particularly limited. From the viewpoint of strength as a support, however, the thickness is preferably 3 μm or more, more preferably 5 μm or more, and even more preferably 10 μm or more. From the viewpoint of flexibility, the thickness is preferably 150 μm or less, more preferably 75 μm or less, and even more preferably 50 μm or less.

Examples of the method for applying the resin composition include methods using a bar coater, a roll coater, a knife coater, a comma coater, a reverse coater, a doctor blade float coater, a gravure coater, a slit die coater, and the like. After the application, heat treatment is carried out and thereby the organic solvent in the resin composition is removed and imidization is carried out. The heat treatment temperature is from 100 to 300°C, and preferably from 150 to 250°C. The heat treatment time usually may be appropriately chosen within the range of from 20 seconds to 30 minutes and it may be either continuous or intermittent. When the resin composition is laminated on both sides of the heat-resistant insulation film, the resin composition may be applied and dried on one side after another, or may be applied and dried on both sides simultaneously. A release treated film may, as necessary, be laminated on the surface of the resin composition applied.

The thickness of the resin composition for lamination, which can be appropriately chosen, is 0.1 μm to 500 μm, preferably 1 μm to 100 μm, and more preferably 2 μm to 50 μm.

When the laminated film of the present invention is used as an adhesive tape, adhesiveness improvement treatment may be applied to one side or both sides of the heat-resistant insulation film according to the intended purpose. As the adhesion improvement treatment, preferred are electrodischarge treatment, such as normal pressure plasma, corona discharge plasma, and low temperature plasma treatment.

For pressure bonding another substrate to the adhesive tape, a presser, a roll laminator, and the like can be used. Although pressure bonding may be performed under application of heat, but the temperature is 100°C or lower, and preferably 80°C or lower. It is most preferred to perform the pressure bonding at a room temperature of from 20 to 30°C. While the pressure bonding may be performed either in the air or in nitrogen, a vacuum is preferred.

When the laminated film of the present invention is used as an adhesive transfer film, release treatment may be applied to one side or both sides of the heat-resistant insulation film according to the intended purpose. Preferred is one treated by the application of a silicone resin, a fluororesin, or the like as the release treatment.

In performing transfer, the resin composition layer of the laminated film is stuck to a substrate such as a glass substrate and then pressure bonded. The pressure bonding may be performed using apresser, a roll laminator, and the like, and the pressure bonding may be performed with the application of heat, as necessary. The temperature for this is 20°C or higher and 200°C or lower, preferably 180°C or lower. While the pressure bonding may be performed either

in the air or in nitrogen, a vacuum is preferred.

For pressure bonding another substrate to the resin composition layer transferred, the substrate is pressure bonded with a presser, a roll laminator, or the like after peeling the heat-resistant insulation film off. Although pressure bonding may be performed under application of heat, but the temperature is 100°C or lower, and preferably 80°C or lower. It is most preferred to perform the pressure bonding at a room temperature of 20 to 30°C. While the pressure bonding may be performed either in the air or in nitrogen, a vacuum is preferred.

In the present invention, the resin composition may also be applied directly to a glass substrate or the like and then dried. Examples of the application method include a spin coater method, a screen printing method, a gravure coater method, a slit die coater method, and a bar coater method.

EXAMPLES

The present invention will be described below with reference to Examples, but the present invention is not limited to these Examples. The methods for evaluating glass transition temperature, weight loss ratio, and adhesion force are described below.

(1) Measurement of glass transition temperature

Each of polyamic acid resin solutions (PA1 to PA18) described in Production Examples 1 to 18 below was applied with a bar coater to a shiny side of a 18 μm thick electrolytic copper foil so as to have a thickness of 20 μm, then dried at 80°C for 10 minutes and at 150°C for additional 10 minutes, and subsequently heat-treated under a nitrogen atmosphere at 250°C for 10 minutes to convert the resin into a polyimide, affording a polyimide laminated copper foil. Subsequently, the copper foil of the resulting polyimide laminated copper foil was entirely etched with a ferric chloride solution, affording a single membrane of the polyimide.

About 10 mg of the resulting polyimide single membrane was filled in a standard aluminum container and then measured with a different scanning calorimeter DSC-50 (manufactured by Shimadzu Corporation) (the DSC method), and the glass transition temperature was calculated from the inflection point of the resulting DSC curve. After preliminary drying at 80°C for 1 hour, measurement was performed at a rate of temperature rise of 20°C/min.

(2) Measurement of weight loss ratio

About 15 mg of the single membrane of the polyimide prepared above was filled in a standard aluminum container and then measured with a thermo gravimetric analyzer TGA-50 (manufactured by Shimadzu Corporation). As to the measurement conditions, the temperature was held at 60°C for 30 minutes, and then the temperature was raised to 500°C at a rate of temperature rise of 5°C/min.

The temperature at which weight loss began was read from the resulting weight loss curve, and this temperature was defined as a thermal decomposition onset temperature.

(3) Measurement of adhesion force (ordinary state)

Cuts were formed at 10 mm intervals on the polyimide film of the polyimide film laminated glass substrate obtained in each of Examples and Comparative Examples, and then a 10 mm wide polyimide film was measured with "TENSILON" UTM-4-100 manufactured by Toyo Boldwin Co., Ltd. at a pull rate of 50 mm/min and a peel off angle of 90°.

(4) Measurement of average molecular weight of polysiloxane di-amine, and calculation of value of n

5 grams of a polysiloxane di-amine as a sample was placed in a beaker and 50 ml of a mixed solution (IPA : toluene = 1 : 1) was poured thereinto, and then the sample was dissolved. Subsequently, using an automatic potentiometric titrator AT-610 manufactured by Kyoto Electronics Manufacturing Co., Ltd., a 0.1 N hydrochloric acid aqueous solution was dropped under stirring and thereby the dropping amount corresponding to the neutralization point was determined. From the resulting dropping amount of the 0.1 N hydrochloric acid aqueous solution, the average molecular weight was calculated using the following equation (3).

$$2 \times [10 \times 36.5 \times (\text{dropping amount (g)})]/5 = \text{average molecular weight} \quad (3)$$

Subsequently, the molecular weight in the case of n = 1 in the polysiloxane di-amine used and the molecular weight in the case of n = 10 in the polysiloxane di-amine used were calculated from their chemical structural formulae,

and the relation between the value of n and the molecular weight was determined as a linear function equation. The average molecular weight was applied to the equation, and thereby the average of n was determined.

The names of the abbreviations of the tetracarboxylic dianhydrides and the di-amines shown in the following Production Examples are as follows. BPDA: 3,3',4,4'-biphenyltetracarboxylic dianhydride ODPA: 3,3',4,4'-diphenylethertetracarboxylic dianhydride BTDA: 3,3',4,4'-benzophenonetetracarboxylic dianhydride SiDA: 1,1,3,3-tetramethyl-1,3-bis(3-aminopropyl)disiloxane (molecular weight: 248, n = 1 in formula (1)) APPS1: α,ω-bis-(3-aminoprcpyl)polydimethylsiloxane (average molecular weight: 400, n = 3 in formula (1)) APPS2: α,ω-bis-(3-aminopropyl)polydimethylsiloxane (average molecular weight: 860, n = 9 in formula (1)) APPS3: α,ω-bis-(3-aminopropyl)polydimethylsiloxane (average molecular weight: 1600, n = 19 in formula (1)) APPS4: α,ω-bis-(3-aminopropyl)polydimethylsiloxane (average molecular weight: 3000, n = 37 in formula (1)) APPS5: α,ω-bis-(3-aminopropyl)polydimethylsiloxane (average molecular weight: 4400, n = 57 in formula (1)) 44DAE: 4,4'-diaminodiphenylether APB: 1,3-bis(3-aminophenoxy)benzene 33DDS: 3,3'-diamino diphenyl sulfone PDA: p-phenylenediamine m-TB: 2,2'-dimethyl-4,4'-diaminobiphenyl TPE-R: 1,4-bis(3-aminophenoxy)benzene DMAc: N,N-dimethylacetamide.

Production Example 1 (Polymerization of polyamic acid resin solution)

To a reaction vessel equipped with a thermometer, a dry nitrogen inlet, an apparatus for heating/cooling with hot water and cooling water, and a stirrer were charged 86 g (0.1 mol) of APPS2 and 80.1 g (0.4 mol) of 44DAE together with 1285 g of DMAc, and then dissolved. Thereafter, 155.1 g (0.5 mol) of ODPA was added, followed by a reaction at room temperature for 1 hour and subsequently at 60°C for additional 5 hours, so that 20% by weight polyamic acid resin solution (PA1) was obtained.

Production Examples 2 to 11 (Polymerization of polyamic acid resin solution)

Each of 30% by weight polyamic acid resin solutions (PA2 to P11) was prepared by conducting the same operations as in Production Example 1 except that the types and the charges of tetracarboxylic dianhydride and diamine were changed as shown in Table 1.

[Table 1]

| | | Acid component | Di-amine component | | | | | | | Solvent | Solid concentration (wt%) |
|---|---|---|---|---|---|---|---|---|---|---|---|
| Upper: compositional ratio (mol%)/Lower: charge (g) | | ODPA | SiDA | APPS1 | APPS2 | APPS3 | APPS4 | APPS5 | 44 DAE | DMAc | |
| Production Example 1 | PA-1 | 100 | | | 20 | | | | 80 | 1285 | 20 |
| | | 155.1 | | | 86.0 | | | | 80.1 | | |
| Production Example 2 | PA-2 | 100 | | | 55 | | | | 45 | 1223 | 30 |
| | | 186.1 | | | 284.3 | | | | 54.1 | | |
| Production Example 3 | PA-3 | 100 | | | 60 | | | | 40 | 1269 | 30 |
| | | 186.1 | | | 309.6 | | | | 48.1 | | |
| Production Example 4 | PA-4 | 100 | | | 80 | | | | 20 | 1211 | 30 |
| | | 155.1 | | | 344.0 | | | | 20.0 | | |
| Production Example 5 | PA-5 | 100 | | | 90 | | | | 10 | 1288 | 30 |
| | | 155.1 | | | 387.0 | | | | 10.0 | | |
| Production Example 6 | PA-6 | 100 | | | 100 | | | | | 1365 | 30 |
| | | 155.1 | | | 430.0 | | | | | | |
| Production Example 7 | PA-7 | | 80 | | | | | | 20 | 1280 | 30 |
| | | | 198.4 | | | | | | 40.0 | | |
| Production Example 8 | PA-8 | | | 80 | | | | | 20 | 1365 | 30 |
| | | | | 256.0 | | | | | 32.0 | | |
| Production Example 9 | PA-9 | | | | | 80 | | | 20 | 1280 | 30 |
| | | | | | | 384.0 | | | 12.9 | | |
| Production Example 10 | PA-10 | | | | | | 80 | | 20 | 1251 | 30 |
| | | | | | | | 480.0 | | 8.0 | | |
| Production Example 11 | PA-11 | | | | | | | 80 | 20 | 1141 | 30 |
| | | | | | | | | 528.0 | 6.0 | | |

Production Examples 12 to 18 (Polymerization of polyamic acid resin solution)

Each of 30% by weight polyamic acid resin solutions (PA12 to P18) was prepared by conducting the same operations as in Production Example 1 except that the types and the charges of tetracarboxylic dianhydride and diamine were changed as shown in Table 2.

[Table 2]

| Upper: compositional ratio (mol%)/Lower: charge (g) | | | | | | | | | | | | | | |
|---|---|---|---|---|---|---|---|---|---|---|---|---|---|---|
| | | Acid component | | | Di-amine | | | | | | | Solvent | Solid concentration |
| | | ODPA | BPDA | BTDA | APPS2 | 44 DAE | APB | 33DDS | PDA | m-TB | TPE-R | DMAc | |
| Production Example 12 | PA-12 | | 100 | | 80 | 20 | | | | | | 1193 | 30 |
| | | | 147.1 | | 344.0 | 20.0 | | | | | | | |
| Production Example 13 | PA-13 | | | 100 | 80 | 20 | | | | | | 1225 | 30 |
| | | | | 161.1 | 344.0 | 20.0 | | | | | | | |
| Production Example 14 | PA-14 | 100 | | | 80 | | 20 | | | | | 1233 | 30 |
| | | 155.1 | | | 344.0 | | 29.2 | | | | | | |
| Production Example 15 | PA-15 | 100 | | | 80 | | | 20 | | | | 1223 | 30 |
| | | 155.1 | | | 344.0 | | | 24.8 | | | | | |
| Production Example 16 | PA-16 | 100 | | | 80 | | | | 20 | | | 1190 | 30 |
| | | 155.1 | | | 344.0 | | | | 10.8 | | | | |
| Production Example 17 | PA-17 | 100 | | | 80 | | | | | 20 | | 1214 | 30 |
| | | 155.1 | | | 344.0 | | | | | 21.2 | | | |
| Production Example 18 | PA-18 | 100 | | | 80 | | | | | | 20 | 1233 | 30 |
| | | 155.1 | | | 344.0 | | | | | | 29.2 | | |

Example 1

The polyamic acid resin solution (PA3) prepared in Production Example 3 was applied on a 0.7 mm thick alkali-free glass substrate with a spin coater at a rotation speed adjusted so as to provide a thickness of 10 μm after drying and imidization, and then the solution was dried by heat treatment at 120°C for 10 minutes. Subsequently, heat treatment was carried out at 250°C for 10 minutes to perform imidization completely, affording a polyimide resin laminated glass substrate.
A polyimide film ("Kapton" 150EN produced by Du pont-Toray Co., Ltd.) was superposed on the polyimide resin laminated glass substrate prepared by the above-described method and the polyimide film was pressure bonded with a hand roll at a room temperature of 25°C, affording a polyimide laminated glass substrate.
The adhesive force of the resulting polyimide laminated glass substrate, and the glass transition temperature and the thermal decomposition onset temperature of the polyimide resin were summarized in Table 3.

Examples 2 to 4

Each of polyimide laminated glass substrates was obtained by performing the same operations as in Example 1 except that the polyamic acid resin solution was changed as shown in Table 3.
The adhesive force of each of the resulting polyimide laminated glass substrates, and the glass transition temperature and the thermal decomposition onset temperature of each of the polyimide resins were summarized in Table 3.

Comparative Examples 1 and 2

Each of polyimide laminated glass substrates was obtained by performing the same operations as in Example 1 except that the polyamic acid resin solution was changed as shown in Table 3.
The adhesive force of each of the resulting polyimide laminated glass substrates, and the glass transition temperature and the thermal decomposition onset temperature of each of the polyimide resins were summarized in Table 3.

[Table 3]

| | Polyamic acid resin solution | Polysiloxane di-amine content (mol%) | Glass transition temperature (°C) | Adhesive force (g/cm) | Thermal decomposition onset temperature (°C) |
|---|---|---|---|---|---|
| Example 1 | PA-3 | 60 | 30 | 5 | 341 |
| Example 2 | PA-4 | 80 | 10 | 12 | 340 |
| Example 3 | PA-5 | 90 | -8 | 30 | 345 |
| Example 4 | PA-6 | 100 | -12 | 25 | 315 |
| Comparative Example 1 | PA-1 | 20 | 190 | 0 | 420 |
| Comparative Example 2 | PA-2 | 55 | 43 | 0 | 384 |

As in Examples, when the content of the polysiloxane di-amine was adjusted to 60 mol% or more, the glass transition temperature of the polyimide resin was 30°C or lower and good adhesiveness was exhibited. In addition, the thermal decomposition onset temperature was 300°C or higher and high heat resistance was exhibited. In Comparative Examples, adhesiveness was not developed because the glass transition temperature was higher than 30.

Example 5

A polyimide laminated glass substrate was obtained by performing the same operations as in Example 1 except that the polyamic acid resin solution was changed to PA-9.
The adhesive force of the resulting polyimide laminated glass substrate, and the glass transition temperature and the thermal decomposition onset temperature of the polyimide resin were summarized in Table 4.

Comparative Examples 3 and 4

Each of polyimide laminated glass substrates was obtained by performing the same operations as in Example 1 except that the polyamic acid resin solution was changed as shown in Table 4.

The adhesive force of each of the resulting polyimide laminated glass substrates, and the glass transition temperature and the thermal decomposition onset temperature of each of the polyimide resins were summarized in Table 3.

Comparative Examples 5 and 6

Due to the occurrence of gelation of each of the polyamic acid resin solutions (PA-10 and PA-11), measuring of adhesive force, glass transition temperature, and thermal decomposition onset temperature was not possible.

[Table 4]

| | Polyamic acid resin solution | n in general formula (1) | Glass transition temperature (°C) | Adhesive force (g/cm) | Thermal decomposition onset temperature (°C) |
|---|---|---|---|---|---|
| Example 2 | PA-4 | 9 | 10 | 12 | 340 |
| Example 5 | PA-9 | 19 | 10 | 11 | 341 |
| Comparative Example 3 | PA-7 | 1 | 105 | 0 | 361 |
| Comparative Example 4 | PA-8 | 3 | 64 | 0 | 357 |
| Comparative Example 5 | PA-10 | 37 | Not measurable | | |
| Comparative Example 6 | PA-11 | 57 | Not measurable | | |

In Examples in which n in general formula (1) was 5 to 30, the glass transition temperature of each of the polyimide resins was 30°C or lower and good adhesiveness was exhibited. In addition, the thermal decomposition onset temperature was 300°C or higher and high heat resistance was exhibited. In Comparative Examples, when n was less than 5, the glass transition temperature was high and adhesiveness was not exhibited, whereas when n was greater than 30, the polyamic acid resin solution gelled.

Examples 6 to 12

Each of polyimide laminated glass substrates was obtained by performing the same operations as in Example 1 except that the polyamic acid resin solution was changed as shown in Table 5.

The adhesive force of each of the resulting polyimide laminated glass substrates, and the glass transition temperature and the thermal decomposition onset temperature of each of the polyimide resins were summarized in Table 5.

[Table 5]

| | Polyamic acid resin solution | Glass transition temperature (°C) | Adhesive force (g/cm) | Thermal decomposition onset temperature (°C) |
|---|---|---|---|---|
| Example 6 | PA-12 | 17 | 9 | 346 |
| Example 7 | PA-13 | 13 | 10 | 348 |
| Example 8 | PA-14 | 9 | 60 | 348 |

(continued)

| | Polyamic acid resin solution | Glass transition temperature (°C) | Adhesive force (g/cm) | Thermal decomposition onset temperature (°C) |
|---|---|---|---|---|
| Example 9 | PA-15 | 9 | 40 | 343 |
| Example 10 | PA-16 | 12 | 8 | 354 |
| Example 11 | PA-17 | 14 | 10 | 351 |
| Example 12 | PA-18 | 11 | 9 | 349 |

Example 13

The heat-resistant resin solution (PA-4) prepared in Production Example 4 was applied to a polyimide film 100 μm in thickness and 250 mm in width ("Kapton" 300H produced by Du pont-Toray Co., Ltd.), which was release treated with a silicone resin, with a comma coater so as to have a thickness of 15 μm after drying and imidization. Subsequently, heat treatment was carried out at 120°C for 1 minute and subsequently at 250°C for 1 minute, affording a polyimide resin laminated film having a polyimide resin layer on one side thereof. Subsequently, a PET film 38 μm in thickness and 250 mm in width release treated with a silicone resin was laminated at 25°C on the polyimide resin layer, affording a polyimide resin laminated film with a protective film.

The polyimide resin laminated film with a protective film obtained above was cut into a prescribed size and then the PET film, which was the protective film, was removed. On a hot plate whose surface temperature was set at 120°C was placed a 0.7 mm thick alkali-free glass substrate (produced by Corning Incorporated), and then the polyimide resin laminated film was pressure bonded with a hand roll. Subsequently, the polyimide film was removed, affording a polyimide resin laminated glass substrate. Observation of the peeled side of the removed polyimide film revealed that the surface had no residue of the polyimide resin thereon.

A polyimide film ("Kapton" 150EN produced by Du pont-Toray Co., Ltd.) was superposed on the polyimide resin laminated glass substrate prepared by the method described and then a polyimide film was pressure bonded with a hand roll at a room temperature of 25°C, affording a polyimide laminated glass substrate. The adhesive force of the resulting polyimide laminated glass substrate was 11 g/cm.

INDUSTRIAL APPLICABILITY

According to the present invention, there can be provided a highly heat-resistant polyimide resin that exhibits good adhesiveness at room temperature and is prevented from generation of volatiles due to decomposition or the like even at high temperatures equal to or higher than 250°C, and an adhesive resin and an adhesive resin-laminated film using the same.

## Claims

**1.** A polyimide resin having at least a tetracarboxylic dianhydride residue and a di-amine residue and having a glass transition temperature of 30°C or lower, wherein a residue of a polysiloxane di-amine represented by general formula (1) is contained as the di-amine residue,

[Chemical Formula 1]

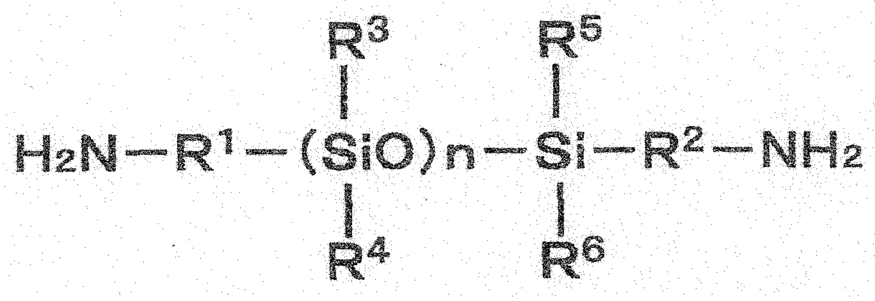

(1)

wherein n is a natural number and the average calculated from the average molecular weight of the polysiloxane di-amine is within the range of from 5 to 30; $R^1$ and $R^2$ may be the same or different and each represent an alkylene group having 1 to 30 carbon atoms or a phenylene group; $R^3$ to $R^6$ may be the same or different and each represent an alkylene group having 1 to 30 carbon atoms, a phenyl group, or a phenoxy group.

**2.** The polyimide resin according to claim 1, wherein the residue of the polysiloxane di-amine represented by general formula (1) is contained as the di-amine residue in an amount of 60 mol% or more of all di-amine residues.

**3.** The polyimide resin according to claim 1 or 2, wherein a residue of an aromatic di-amine is further contained as the di-amine residue in an amount of 1 to 40 mol% of all di-amine residues.

**4.** The polyimide resin according to claim 3, wherein the aromatic di-amine is an aromatic di-amine represented by general formula (2),

[Chemical Formula 2]

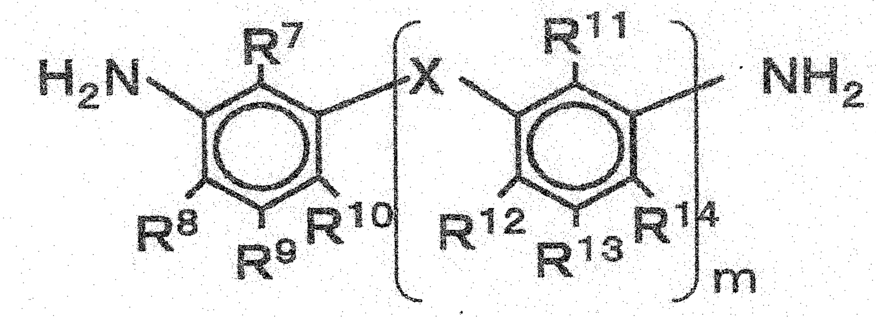

(2)

wherein m represents an integer within the range of from 1 to 3; X represents a group selected from O, $SO_2$, CO, $CH_2$, C $(CH_3)_2$, and $C(CF_3)_2$; $R^7$ to $R^{14}$ may be the same or different and each represent a group selected from a hydrogen atom, an alkyl group having 1 to 30 carbon atoms, an alkoxy group having 1 to 30 carbon atoms, a hydroxyl group, halogen, a carboxyl group, a sulfone group, a nitro group, and a cyano group.

**5.** The polyimide resin according to claim 4, wherein the aromatic di-amine represented by general formula (2) is 1,3-bis(3-aminophenoxy)benzene or 3,3'-diamino diphenyl sulfone.

**6.** The polyimide resin according to any one of claims 1 to 5, wherein the tetracarboxylic dianhydride residue is a residue of an aromatic tetracarboxylic dianhydride.

**7.** A resin composition comprising at least the polyimide resin according to any one of claims 1 to 6.

**8.** The resin composition according to claim 7, wherein the glass transition temperature is 30°C or lower.

**9.** A laminated film in which the resin composition according to claim 7 or 8 is laminated on at least one side of a heat-resistant insulation film.

**10.** The laminated film according to claim 9, wherein the surface of the heat-resistant insulation film on which the resin composition is laminated is release treated.

**11.** A laminated film according to claim 9 or 10, wherein a release treated film is further laminated on the surface of the laminated resin composition.

**INTERNATIONAL SEARCH REPORT**

International application No.
PCT/JP2012/073025

A. CLASSIFICATION OF SUBJECT MATTER
*C08G73/10*(2006.01)i, *B32B27/34*(2006.01)i, *C09J7/00*(2006.01)i, *C09J179/08*(2006.01)i, *C09J183/08*(2006.01)i, *C09J183/10*(2006.01)i

According to International Patent Classification (IPC) or to both national classification and IPC

B. FIELDS SEARCHED

Minimum documentation searched (classification system followed by classification symbols)
C08G73/10, B32B27/34, C09J7/00, C09J179/08, C09J183/08, C09J183/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 9-183850 A (Ube Industries, Ltd.), 15 July 1997 (15.07.1997), claims; paragraphs [0001], [0007], [0008]; examples (Family: none) | 1-11 |
| X<br>A | JP 61-203132 A (General Electric Co.), 09 September 1986 (09.09.1986), example 2 & US 4558110 A | 1,2,7,8<br>3-6,9-11 |
| A | JP 2009-91457 A (Kaneka Corp.), 30 April 2009 (30.04.2009), paragraphs [0027], [0028] (Family: none) | 1-11 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 September, 2012 (28.09.12) | 09 October, 2012 (09.10.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008308549 A
- JP 2005105246 A
- JP 5200946 A
- JP 2004277619 A